Europäisches Patentamt

European Patent Office

Office européen des brevets

(11) Veröffentlichungsnummer: **0 234 664 B1**

# (12) EUROPÄISCHE PATENTSCHRIFT

(45) Veröffentlichungstag der Patentschrift: **09.12.92**

(21) Anmeldenummer: **87200293.6**

(22) Anmeldetag: **20.02.87**

(51) Int. Cl.⁵: **G02B 6/38,** C04B 35/52, C03B 37/14

(54) **Vorrichtung zum Verbinden von Lichtwellenleitern und Verfahren zu deren Herstellung.**

(30) Priorität: **25.02.86 DE 3605966**

(43) Veröffentlichungstag der Anmeldung:
**02.09.87 Patentblatt 87/36**

(45) Bekanntmachung des Hinweises auf die Patenterteilung:
**09.12.92 Patentblatt 92/50**

(84) Benannte Vertragsstaaten:
**DE FR GB IT NL SE**

(56) Entgegenhaltungen:
**FR-A- 2 438 011**
**US-A- 4 046 454**

**PATENT ABSTRACTS OF JAPAN, Band 5, Nr. 185 (P-91)[857], 25. November 1981; & JP-A-56 113 114**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR GB IT NL SE**

(72) Erfinder: **Hübner, Horst Dr.**
**Dompeweg 11**
**W-5223 Nümbrecht(DE)**
Erfinder: **Lersmacher, Bernhard Dr.**
**Schlossweiherstrasse 31**
**W-5100 Aachen(DE)**

(74) Vertreter: **Koch, Ingo, Dr.-Ing. et al**
**Philips Patentverwaltung GmbH Wendenstrasse 35 Postfach 10 51 49**
**W-2000 Hamburg 1(DE)**

## Beschreibung

Die Erfindung betrifft eine Vorrichtung zum Verbinden einer ersten Gruppe von Lichtwellenleitern auf Glasfaserbasis mit einer zweiten ähnlichen Gruppe, enthaltend einen Träger mit Faserführungsrillen. Ferner betrifft die Erfindung ein Verfahren zur Herstellung des Trägers.

Bei bekannten Vorrichtungen der eingangs genannten Art besteht der Träger aus Silizium (DE-OS 23 45 273, US-PS 40 46 454, The Western Electric Engineer (Winter 1980) 96-101), Galliumphosphid oder Galliumarsenid (DE-OS 23 45 273), Metall (DE-OS 24 49 359, DE-PS 25 57 660, US-PS 40 46 454), Kunststoff (DE-PS 25 29 267, DE-PS 25 57 660), Glas (JP-OS 56-113 114) oder einem Sinterkörper aus Siliziumdioxid und Siliziumkarbid (JP-OS 59-222 805).

Für das Verbinden (Spleißen) der Enden zweier oder mehrerer Lichtwellenleiter auf Glasfaserbasis, insbesondere Quarzglasfasern, ist es notwendig, die Enden exakt in entsprechenden Rillen, Rinnen, Nuten oder Kanälen zu führen und zu fixieren. Bei Trägern aus Silizium werden die Rillen durch ein präzise geführtes Ätzverfahren an Siliziumeinkristallen hergestellt. Dieses Verfahren ist jedoch aufwendig und damit kostspielig. Das gleiche gilt für Träger aus Galliumphosphid und Galliumarsenid.

Metalle als Trägermaterialien haben den Nachteil, daß sie entweder im Ausdehnungskoeffizienten nicht an Glas angepaßt sind oder nur mit großem Aufwand mechanisch herstellbar sind.

Kunststoffe als Trägermaterialien haben den Nachteil, daß ihr Ausdehnungskoeffizient um Größenordnungen von dem der Gläser abweicht. Außerdem sind sie nur begrenzt beständig gegen verschiedene Umwelteinflüsse.

Glas als Trägermaterial hat den Nachteil, daß sich die Faserführungsrillen nur mit großem Aufwand nachträglich aufbringen lassen.

Träger in Form von Sinterkörpern aus Siliziumdioxid und Siliziumkarbid haben den Nachteil, daß für die Herstellung genauer Geometrien eine aufwendige Prozeßführung notwendig ist, die Massenherstellungstechniken erschwert.

Die Erfindung hat die Aufgabe, einen korrosionsfesten, mechanisch stabilen Träger für das Verbinden von Lichtwellenleitern zu schaffen, der einfach herstellbar ist, dessen Ausdehnungskoeffizient nahe bei dem von Glas liegt und der die für die Faserführung notwendigen glatten und genau definierten Oberflächen aufweist.

Diese Aufgabe wird erfindungsgemäß dadurch gelöst, daß der mit Faserführungsrillen versehene Träger aus glasartigem Kohlenstoff besteht.

Die Geometrie der Faserführungsrillen ist nicht auf eine bestimmte Profilform beschränkt. Beispiele für geeignete Profilformen sind dreieckige bzw. V-förmige, trapez- und rechteckförmige sowie halbrunde bzw. sickenförmige Profile.

Glasartiger Kohlenstoff, seine Herstellung und seine Eigenschaften sind z.B. in der DE-OS 28 43 676 beschrieben, wonach glasartiger Kohlenstoff durch Festkörperpyrolyse von duroplastischen, gehärteten Kunststoffen, z.B. Phenolharzen, hergestellt wird, d.h. es werden Körper aus einem derartigen Kunststoff in einem Reaktionsgefäß einer definierten Temperatur/Zeit-Behandlung in einer nichtoxidierenden Atmosphäre unterworfen. Dabei erfolgt eine Karbonisation des Kunststoffs.

Die Herstellung des Trägers wird vorzugsweise so vorgenommen, daß die Faserführungsrillen in die Oberfläche eines auskondensierten Phenolharzkörper eingebracht werden und der derart vorgeformte Phenolharzkörper durch einen Karbonisierungsprozeß, d.h. durch Karbonisation, in den Träger aus glasartigem Kohlenstoff umgewandelt wird.

Das Einbringen der Faserführungsrillen erfolgt z.B. durch mechanische Bearbeitung, wie Fräsen, oder durch Gießverfahren. Besonders vorteilhaft ist es, die Faserführungsrillen mit einem der gewünschten Profilform entsprechend gestalteten Preß- oder Prägestempel in den auskondensierten Phenolharzkörper einzupressen.

Phenolharze, die sich für dieses Preß- oder Prägeverfahren besonders eignen, sind vorzugsweise nicht glasspröde auskondensiert, sondern besitzen noch eine gewisse Zähigkeit, die eine bleibende plastische Verformung bei erhöhten Temperaturen (etwa ab 50ºC bis 120ºC) unter Drücken von etwa 10 bis 100 kg/cm$^2$ ermöglicht. Die vorgeprägten Phenolharzkörper werden dann nach bekannten Verfahrensweisen in glasartigen Kohlenstoff überführt.

Um ein Verwerfen des Phenolharzkörpers während des Karbonisationsprozesses zu vermeiden, kann dieser mit entgegenwirkenden, versteifenden Profilen und/oder Einlagen versehen werden.

Bei einer Abwandlung des erfindungsgemäßen Verfahrens werden die Faserführungsrillen in auskarbonisierte Körper aus glasartigem Kohlenstoff eingearbeitet, z.B. durch Einschleifen oder mittels Funkenerosion. Diese Verfahrensweise hat den Vorteil, daß durch sie Probleme der Maßhaltigkeit und des Verwerfens infolge Schrumpfung, wie sie als Begleiterscheinung der Karbonisation auftreten, umgangen werden. Damit können auch Maßnahmen wie das Anbringen von Versteifungen oder eine dem Verwerfen entgegenwirkende Profilgebung in vielen Fällen entfallen.

Die Vorteile von Trägern aus glasartigem Kohlenstoff bestehen im wesentlichen in folgendem:

a) Es können großflächige Träger hergestellt werden, z.B. solche mit Abmessungen von 20 mm x 50 mm bis 60 mm x 120 mm. Dies bedeutet, daß mehr Fasern untergebracht und über längere Strecken in den Rillen geführt werden können.

b) Glasartiger Kohlenstoff ist bei normalen Temperaturen (bis etwa 350°C) praktisch unbegrenzt korrosionsfest.

c) Rohmaterial und Verfahrenstechnik sind sehr billig; die Träger eignen sich zur Massenfertigung.

d) Glasartiger Kohlenstoff kann mit absolut glatten, spiegelnden Oberflächen versehen werden, wodurch sich Beschädigungen der Fasern durch Rauhigkeiten weitestgehend vermeiden lassen.

e) Es lassen sich außer geradlinigen nötigenfalls auch gebogene Kanäle sowie Verzweigungsprofile anfertigen, was beim Ätzen von Siliziumkristallen nicht möglich ist.

f) Der thermische Ausdehnungskoeffizient ist mit = 2,5 bis 3,0.10$^{-6}$ praktisch gleich dem von Silizium, dabei hat glasartiger Kohlenstoff den zusätzlichen Vorteil völliger Isotropie.

Die Erfindung wird nachstehend anhand einer Zeichnung näher erläutert, in der zeigen:

Fig. 1 einen Träger für eine Vorrichtung zum Verbinden von Lichtwellenleitern,

Fig. 2 einen Träger wie in Fig. 1, jedoch mit einem versteifenden Profil,

Fig. 3 einen Träger wie in Fig. 1, jedoch mit versteifenden Einlagen, und

Fig. 4 eine Stapelung mehrerer Träger.

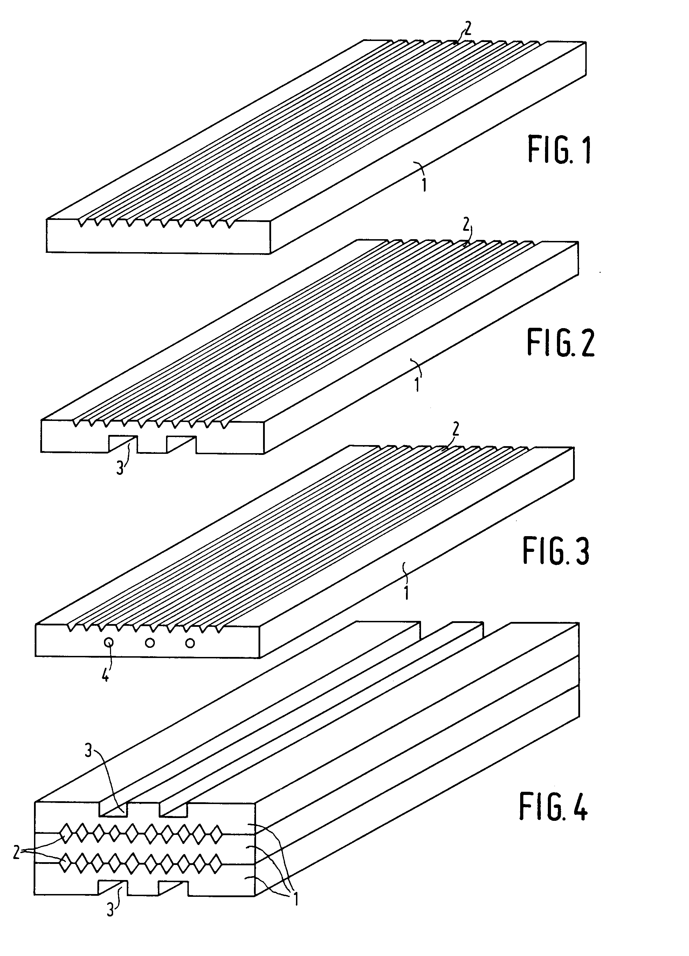

Fig. 1 zeigt einen quaderförmigen Träger 1 aus glasartigem Kohlenstoff, der an seiner Oberseite mit V-förmigen Rillen oder Nuten 2 versehen ist.

Fig. 2 zeigt einen Träger 1, dessen Unterseite mit einem versteifenden Profil 3 versehen ist. Das Profil 3 wird z.B. durch entsprechende Preßstempel oder durch Gießverfahren in den Phenolharzkörper oder durch mechanische Bearbeitung, z.B. Fräsen, in den Träger 1 eingebracht.

Fig. 3 zeigt einen Träger, der mit versteifenden Stiften aus Metall 4 verbunden ist. Die Stifte werden vor dem Karbonisierungsprozeß in den Träger eingebracht. Hierzu werden die versteifenden Stifte, z.B. aus Stahl, Hartmetall, Glas oder Keramik, zweckmäßigerweise so dimensioniert, daß die mit der Karbonisation verbundene Schrumpfung von etwa 20 bis 25% (linear) nicht behindert wird, d.h. der Durchmesser der versteifenden Einlagen ist vorteilhafterweise um den genannten Betrag geringer als der Durchmesser der sie aufnehmenden Kanäle (Öffnungen oder Bohrungen) im Phenolharzkörper.

Fig. 4 zeigt die Stapelung von Trägern 1, die beidseitig mit V-förmigen Rillen oder Nuten 2 versehen sind.

Zum Einbringen der Faserführungsrillen in einen nicht glasspröde auskondensierten Phenolharzkörper wurde ein Präzisionsprägestempel verwendet. Dieser Prägestempel bestand aus gehärtem Stahl, in den ein Rillenprofil von 10 etwa trapezförmigen Rillen durch Funkenerosion eingearbeitet wurde. Die Tiefe der Rillen betrug 45μm, die Breite der Rillen betrug an der Oberfläche 120μm, unten bzw. im Innern 20μm. Der Prägestempel war 40 mm lang. Die Oberfläche des Stempels wurde nachträglich durch CVD-Verfahren mit einer 2μm dicken Schicht aus TiN versehen. Dadurch wird eine hohe Verschleißfestigkeit und damit Profiltreue auch bei langer Gebrauchsdauer gewährleistet.

## Patentansprüche

1. Vorrichtung zum Verbinden einer ersten Gruppe von Lichtwellenleitern auf Glasfaserbasis mit einer zweiten ähnlichen Gruppe, enthaltend einen Träger mit Faserführungsrillen, dadurch gekennzeichnet, daß der Träger (1) aus glasartigem Kohlenstoff besteht.

2. Vorrichtung nach Anspruch 1, dadurch gekennzeichnet, daß der Träger mit versteifenden Profilen (3) und/oder Einlagen (4) versehen ist.

3. Verfahren zur Herstellung eines Trägers für eine Vorrichtung nach Anspruch 1 oder 2, dadurch gekennzeichnet, daß die Faserführungsrillen in die Oberfläche eines auskondensierten Phenolharzkörpers eingebracht werden und der derart vorgeprägte Phenolharzkörper durch Karbonisation in den Träger aus glasartigem Kohlenstoff umgewandelt wird.

4. Verfahren nach Anspruch 3, dadurch gekennzeichnet, daß die Faserführungsrillen mit einem der gewünschten Profilform entsprechend gestalteten Preßstempel in den Phenolharzkörper eingepreßt werden.

5. Verfahren nach Anspruch 3 oder 4, dadurch gekennzeichnet, daß der Phenolharzkörper vor dem Einbringen bzw. Einpressen der Faserführungsrillen nicht glasspröde auskondensiert wird.

6. Verfahren zur Herstellung eines Trägers für eine Vorrichtung nach Anspruch 1, dadurch gekennzeichnet, daß die Faserführungsrillen in auskarbonisierte Körper aus glasartigem Kohlenstoff eingearbeitet werden.

## Claims

1. A device for splicing a first group of optical waveguides of the glass-fibre type with a second similar group, comprising a carrier with fibre-guiding grooves, characterized in that the carrier (1) consists of glass-like carbon.

2. A device as claimed in Claim 1, characterized in that the carrier is provided with strengthening profiles (3) and/or inserts (4).

3. A method of manufacturing a carrier for a device as claimed in Claim 1 or 2, characterized in that the fibre-guiding grooves are formed in the surface of a cured phenol-resin body, after which the phenol-resin body thus formed is converted to the glass-like carbon carrier by carbonization.

4. A method as claimed in Claim 3, characterized in that the fibre-guiding grooves are formed in the phenol-resin body by an extrusion die whose shape corresponds to the required profile.

5. A method as claimed in Claim 3 or 4, characterized in that prior to the formation of the fibre-guiding grooves the phenol-resin body is not cured to the extent that it is as brittle as glass.

6. A method of manufacturing a carrier for a device as claimed in Claim 1, characterized in that the fibre-guiding grooves are formed in fully carbonised bodies of glass-like carbon.

**Revendications**

1. Dispositif pour relier un premier groupe de guides de lumière à base de fibres de verte à un second groupe semblable, comportant un support présentant des rainures de guidage de la fibre, caractérisé en ce que le support (1) est constitué de carbone vitreux.

2. Dispositif selon la revendication 1, caractérisé en ce que le support est pourvu de profils (3) et/ou d'insertions de renfort (4).

3. Procédé de fabrication d'un support pour un dispositif selon la revendication 1 ou 2, caractérisé en ce que les rainures de guidage de la fibre sont réalisées dans la surface d'un corps en résine phénolique complètement condensé et en ce que le corps en résine phénolique ainsi préestampé est transformé par carbonisation en le support en carbone vitreux.

4. Procédé selon la revendication 3, caractérisé en ce que les rainures de guidage de la fibre sont moulées dans le corps en résine phénolique complètement condensé à l'aide d'un outil à presser conçu conformément au profil désiré.

5. Procédé selon la revendication 3 ou 4, caractérisé en ce que le corps en résine phénolique est complètement condensé sans présenter la fragilité du verte avant que les rainures de guidage de la fibre ne soient réalisées ou moulées dans ledit corps.

6. Procédé de fabrication d'un support pour un dispositif selon la revendication 1, caractérisé en ce que les rainures de guidage de la fibre sont réalisées dans des corps en carbone vitreux complètement carbonisés.

FIG. 1

FIG. 2

FIG. 3

FIG. 4